# EUROPÄISCHE PATENTANMELDUNG

(11) **EP 4 711 915 A1**
(43) Veröffentlichungstag der Anmeldung: **18.03.2026**
(21) Anmeldenummer: 24199781.6
(22) Anmeldetag: 11.09.2024
(51) Int. Cl.: G06F 8/51, G06F 8/72, G06F 8/73

(54) **TECHNIKEN ZUM VERARBEITEN VON CODE MITTELS MASCHINENLERNMODELLEN**

(71) Anmelder: Robert Bosch GmbH, 70442 Stuttgart (DE)
(72) Erfinder: Quante, Jochen, 71640 Ludwigsburg (DE); Woehrle, Matthias, 74321 Bietigheim-Bissingen (DE); Leinberger, Martin, 56073 Koblenz (DE); Hecking-Harbusch, Jesko, 71229 Leonberg (DE)

(57) **Zusammenfassung**

Ein Aspekt der vorliegenden Offenbarung betrifft ein Verfahren zum Bearbeiten von Programmcode mittels eines Maschinenlernmodells. Das Verfahren umfasst zugreifen auf einen Originalcode und ersetzen von Elementen des Originalcodes durch Ersatzelemente, um einen modifizierten Code zu erhalten. Die Ersatzelemente sind kürzer sind als die entsprechenden Elemente des Originalcodes. Das Verfahren umfasst weiterhin Verarbeiten des modifizierten Codes durch ein Maschinenlernmodell.

## Beschreibung

### Stand der Technik

In jüngerer Vergangenheit haben Maschinenlernmodelle und insbesondere Sprachmodelle Eingang in zahlreiche Anwendungen der Erzeugung und Verarbeitung von Programmcode gefunden. Zum Beispiel kann Programmcode verbessert, kommentiert, oder von einer ersten in eine zweite Programmiersprache übersetzt werden.

In diesem Zusammenhang kann es gefordert sein, einen möglichst großen Abschnitt des Programmcodes als Eingabe des Maschinenlernmodells zu verwenden. Zum Beispiel kann ein Abschnitt des Programmcodes in eine Anfrage (bspw. einen Prompt) an ein Large-Language-Model eingebaut werden (z.B., um den Programmcode von einer ersten in eine zweite Programmiersprache zu übersetzen). Eine maximale Länge der Anfrage kann zu kurz sein, um den gewünschten Abschnitt auf einmal an das Large-Language-Model zu übergeben und zu verarbeiten.

Die Techniken der vorliegenden Offenbarung widmen sich der Lösung dieses Problems.

### Offenbarung der Erfindung

Das in dieser Offenbarung vorgeschlagene Verfahren nach dem ersten Aspekt betrifft ein Verfahren zum Bearbeiten von Programmcode mittels eines Maschinenlernmodells. Das Verfahren umfasst zugreifen auf einen Originalcode und ersetzen von Elementen des Originalcodes durch Ersatzelemente, um einen modifizierten Code zu erhalten. Die Ersatzelemente sind kürzer als die entsprechenden Elemente des Originalcodes. Das Verfahren umfasst weiterhin Verarbeiten des modifizierten Codes durch ein Maschinenlernmodell.

Ein zweiter Aspekt der vorliegenden Offenbarung betrifft ein Verfahren zum Trainieren eines Maschinenlernmodells zum Bearbeiten von Programmcode. Das Verfahren umfasst Zugreifen auf ein Maschinenlernmodell und Zugreifen auf zwei oder mehr modifizierte Codes. Jeder modifizierte Code ist aus einem Originalcode erzeugt durch Ersetzen von Elementen des Originalcodes durch Ersatzelemente. Die Ersatzelemente sind kürzer als die entsprechenden Elemente des Originalcodes. Die Ersatzelemente für jeden der modifizierten Codes unterscheiden sich zumindest teilweise. Das Verfahren umfasst weiterhin separates Verarbeiten der zwei oder mehr modifizierten Codes durch ein Maschinenlernmodell und Anpassen des Maschinenlernmodells basierend auf dem einer Analyse eines Ergebnisses des Verarbeitens der zwei oder mehr modifizierten Codes durch das Maschinenlernmodell.

Ein dritter Aspekt der vorliegenden Offenbarung betrifft eine Umgebung, die dazu ausgelegt ist, eines der Verfahren der ersten oder zweiten Aspekte auszuführen. Die Umgebung kann eine Entwicklungsumgebung für Programmcode sein.

Ein vierter Aspekt der vorliegenden Offenbarung betrifft ein Computer-Programm, das Anweisungen enthält, die, wenn sie von einer Recheneinheit ausgeführt werden, die Recheneinheit dazu bringen, ein Verfahren zum Bearbeiten von Programmcode mittels eines Maschinenlernmodells gemäß dem ersten Aspekt oder ein Verfahren zum Trainieren eines Maschinenlernmodells zum Bearbeiten von Programmcode gemäß dem zweiten Aspekt auszuführen.

Die Techniken der ersten bis vierten Aspekte können in manchen Implementierungen einen oder mehrere der folgenden Vorteile aufweisen.

Erstens kann es dank der Techniken der vorliegenden Offenbarung möglich sein, längere Abschnitte von Programmcode mittels Maschinenlernmodellen (z.B. Large-Language-Modellen) zu verarbeiten. In manchen Beispielen enthält der Originalcode Bezeichner, bspw. für Variablen oder Funktionen, die eine erhebliche Länge haben. Um die Bezeichner mit dem Maschinenlernmodell zu verarbeiten, kann es notwendig sein, diese in eine Reihe von Symbolen zu zerlegen. Ein Beispiel dafür sind die Tokens eines Large-Language-Modells, also Wörter oder Teile von Wörtern, in die ein Text zerlegt wird. So kann der Variablenname "rbg_VSSWiperCtrl_stLSSCar" zwölf Tokens eines typischen Large-Language-Modells enthalten. Das hat zur Folge, dass die begrenzte Menge von Tokens, die in einer Anfrage von dem Large-Language-Modell verarbeitet werden kann, verhältnismäßig schnell erreicht wird. Als Folge dessen kann die Länge des verarbeitbaren Programmcodes erheblich limitiert sein. Die Techniken der vorliegenden Offenbarung ersetzen Elemente des Originalcodes durch kürzere Ersatzelemente (z.B. den Variablennamen "rbg_VSSWiperCtrl_stLSSCar" durch den Ersatznamen "a"). Das kann die Anzahl an Symbole (z.B. Tokens) reduzieren, ohne dass die Struktur des Programmcodes verändert wird. Dadurch kann das Maschinenlernmodell den modifizierten Programmcode in gleicher Weise verarbeiten, wie den Originalcode. Allerdings kann ein längerer Programmcode in einer einzelnen Anfrage verarbeitet werden.

Zweitens und als Folge dessen kann eine Qualität und/oder Geschwindigkeit der Verarbeitung von Programmcode mittels Maschinenlernmodellen (z.B. Large-Language-Modellen) in manchen Beispielen erhöht werden. So kann bspw. eine Übersetzung von Programmcode von einer ersten in eine zweite Programmiersprache in manchen Fällen dadurch verbessert werden, dass ein längerer Programmcode in einer Anfrage verarbeitet wird. Das kann zum Beispiel in Large-Language-Modellen daher rühren, dass das Large-Language-Modell die gesamte Anfrage als Kontext für eine Verarbeitung verwendet, aber Programmteile außerhalb der Anfrage nicht als Kontext berücksichtigen kann. Das kann eine Verarbeitungsqualität senken, da unter Umständen relevante Information außerhalb des erfassten Kontexts liegen. Ähnliches trifft für andere in der vorliegenden Offenbarung behandelte Verarbeitungsarten vor.

Einige Begriffe, die in der vorliegenden Offenbarung verwendet werden, werden im Folgenden erläutert.

"Programmcode" (auch kurz als "Code" bezeichnet) kann Anweisungen enthalten für ein bestimmtes Computerprogramm oder einen Teil davon, die dessen Funktionalität in einer bestimmten Programmiersprache beschreiben bzw. repräsentieren.

Der Programmcode der vorliegenden Offenbarung kann zumindest ein Teil einer Software (Softwarekomponente) für jedwede technische Vorrichtung sein, die zur Lösung einer konkreten technischen Aufgabe ausgelegt ist. Zum Beispiel kann eine Software einer Recheneinheit (z.B. einer Steuereinheit) mittels der Techniken der vorliegenden Erfindung erzeugten und/oder verarbeiteten Programmcode enthalten oder auf diesem beruhen, ggf. nach einem oder mehreren Verarbeitungsschritten wie einer Kompilierung. Weitere konkrete Beispiele werden unten genannt.

Ein "System" der vorliegenden Offenbarung kann jedwede technische Vorrichtung sein, die zur Lösung einer konkreten technischen Aufgabe ausgelegt ist. Ein System kann Software- und/oder Hardware-Komponenten umfassen (oder aus einer oder mehrerer dieser Komponenten bestehen). Ein System kann eine Recheneinheit umfassen oder zur Ausführung auf einer Recheneinheit ausgelegt sein. Zum Beispiel kann ein System eine Recheneinheit (z.B. eine Steuereinheit) sein mit entsprechender Programmierung (d.h., das System kann Programmcode enthalten, das seine Funktionalität zumindest teilweise festgelegt; dieser Programmcode kann der mittels der Techniken der vorliegenden Erfindung erzeugte und/oder verarbeitete Programmcode sein oder auf diesem beruhen, ggf. nach einem oder mehreren Verarbeitungsschritten wie einer Kompilierung). Weitere konkrete Beispiele werden unten genannt.

Ein "Maschinenlernmodell" kann jedes Modell sein, das mittels Techniken des maschinellen Lernens auf das Verarbeiten Von Programmcode trainiert wird oder ist. In manchen Beispielen kann das Maschinenlernmodell ein generatives Maschinenlernmodell sein, z.B. ein generatives Foundation-Modell. In manchen Beispielen kann das Maschinenlernmodell ein Sprachmodell bzw. Modell zur Spracherzeugung umfassen. Zum Beispiel kann das Maschinenlernmodell ein Large Language Model umfassen. Das Maschinenlernmodell kann auf einem bestehenden (trainierten) generativen Maschinenlernmodell aufbauen und mit einem oder mehreren der weiter unten beschriebenen Techniken für den Einsatz in den Verfahren der vorliegenden Offenbarung angepasst sein (z.B. durch weiteres Training und/oder Fine-Tuning). Zum Beispiel kann das generative Maschinenlernmodell eines oder mehrere umfassen von CodeLlama, Llama, Mistral, CoPilot und/oder Sprachmodelle aus der GPT-Familie (zum Beispiel ChatGPT). In anderen Beispielen können Multi-modale Modelle wie beispielsweise Gemini, GPT4o eingesetzt werden.

### Kurzbeschreibung der Figuren

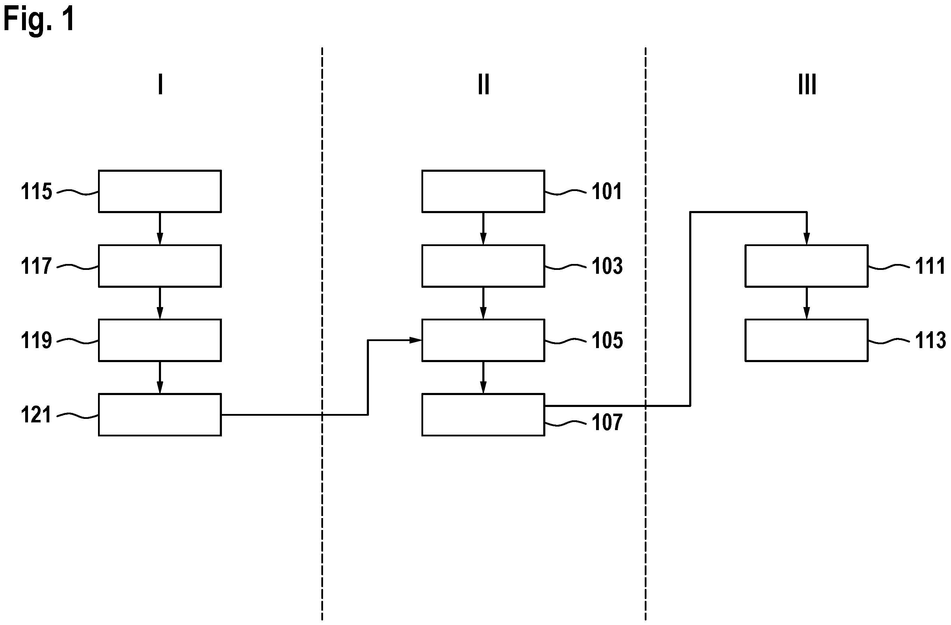

**Fig. 1** illustriert Verfahren der vorliegenden Offenbarung. In der linken Spalte ist ein Flussdiagramm eines Verfahrens zum Trainieren eines Maschinenlernmodells zum Bearbeiten von Programmcode gemäß der vorliegenden Offenbarung gezeigt. In der mittleren Spalte ist ein Flussdiagramm eines Verfahrens zum Bearbeiten von Programmcode mittels eines Maschinenlernmodells gemäß der vorliegenden Offenbarung gezeigt. In der rechten Spalte ist ein Flussdiagramm zu Verfahren der Erzeugens und Implementierens von Softwarekomponenten gezeigt, die die mit den Verfahren der vorliegenden Offenbarung verarbeiteten Programmcodes enthalten bzw. auf diesen beruhen.
**Fig. 2** zeigt schematisch Verfahren zum Erzeugen eines Wörterbuchs der vorliegenden Offenbarung.
**Fig. 3** zeigt schematisch Verfahren zum Trainieren eines Maschinenlernmodells zum Bearbeiten von Programmcode gemäß der vorliegenden Offenbarung.

### Detaillierte Beschreibung

**Fig. 1** illustriert Verfahren der vorliegenden Offenbarung. In der mittleren Spalte (II) ist ein Flussdiagramm eines Verfahrens zum Bearbeiten von Programmcode mittels eines Maschinenlernmodells gemäß der vorliegenden Offenbarung gezeigt.

Das Verfahren zum Bearbeiten von Programmcode mittels eines Maschinenlernmodells umfasst Zugreifen 101 auf einen Originalcode. Der Originalcode kann jeder Programmcode oder ein Teil oder Abschnitt eines Programmcodes sein. In manchen Beispielen kann der Originalcode eine abgeschlossene Softwarekomponente definieren (z.B. eine Softwarekomponente eines Steuergeräts der unten beschriebenen Softwarekomponenten). In anderen Beispielen kann der Originalcode eine Untereinheit einer abgeschlossenen Softwarekomponente sein (z.B. einer Methode oder eine Funktion). In wieder anderen Beispielen kann der Originalcode ein Teil der vorbeschriebenen Softwarekomponenten sein. Der Originalcode kann in einer bestimmten Programmiersprache abgefasst sein (d.h. in einer formale Sprache zur Formulierung von Datenstrukturen und Algorithmen, d. h. von Rechenvorschriften, die von einer Recheneinheit ausgeführt werden können). Der Originalcode kann in einer höheren Programmiersprache, aber auch in einer Maschinensprache abgefasst sein. In anderen Beispielen (oder zusätzlich) kann der Originalcode in einer menschenlesbaren Beschreibung abgefasst sein (z.B. ein Code, der nicht zur maschinellen Interpretation, sondern lediglich zur Veranschaulichung dient). Der Originalcode kann maschinell interpretierbare Elemente, aber auch Metadaten enthalten (z.B. Kommentare).

In manchen Beispielen kann der Originalcode maschinell erzeugt sein.

Das Verfahren umfasst weiterhin Ersetzen 103 von Elementen des Originalcodes durch Ersatzelemente, um einen modifizierten Code zu erhalten. Die Ersatzelemente sind kürzer als die entsprechenden Elemente des Originalcodes.

In manchen Beispielen weisen die Ersatzelemente weniger Symbole auf, als die entsprechenden Elemente des Originalcodes. Zusätzlich oder alternativ können zumindest Teile der Elemente des Originalcodes (d.h. einige oder alle) Bezeichner (bspw. Namen) für Komponenten des Originalcodes sein. Die Bezeichner können insbesondere Variablen, Funktionen, Methoden und/oder Klassen des Originalcodes bezeichnen.

Ein Symbol kann dabei jedes Element sein, das in dem Originalcode enthalten ist, wobei zumindest teilweise Syntaxelemente des Originalcodes mit Bezeichnern aus mehreren Symbolen bezeichnet sind. Die Symbole können zum Beispiel einzelne Zeichen (z.B. Buchstaben, Zahlen und/oder Sonderzeichen) sein oder aus mehreren Zeichen (z.B. Buchstaben, Zahlen und/oder Sonderzeichen) zusammengesetzt sein. Zusätzlich oder alternativ können die Symbole Silben oder Gruppen von Silben sein. Weiter zusätzlich oder alternativ können die Symbole Worte oder Ausdrücke aus mehreren Worten sein.

In manchen Beispielen kann die Art des Symbols bestimmt sein durch das Maschinenlernmodell, mit dem der modifizierte Code verarbeitet werden soll. Zum Beispiel können bestimmte Maschinenlernmodelle Eingaben erhalten, in denen die Anfragen an das Maschinenlernmodell in einer bestimmten Weise in Elemente zerlegt werden (geparst werden). Jedes der einzelnen Elemente wird dann (ggf. nach einem oder mehreren Vorverarbeitungsschritten) an einen unterschiedlichen Eingang des Maschinenlernmodells gespeist. In anderen Beispielen werden die einzelnen Elemente sequentiell eingespeist. In manchen Beispielen können die Symbole Tokens eines Maschinenlernmodells (z.B. eines generativen Sprachmodells, z.B. eines Large-Language-Modells) sein.

Je nach der Art der Symbole kann sich die Länge der Ersatzelemente unterschiedlich bemessen (und folglich auch die Vorschrift, gemäß der bestimmt wird, ob ein (Ersatz-) Element kürzer ist als ein anderes). Zum Beispiel kann sich eine Länge beziehen auf eine Anzahl von Zeichen (z.B. Buchstaben, Zahlen und/oder Sonderzeichen), eine Anzahl von Silben oder eine Anzahl von Tokens (d.h. Eingabe-Elemente eines Maschinenlernmodells).

Der Schritt des Ersetzens 103 von Elementen des Originalcodes durch Ersatzelemente kann in manchen Beispielen eine oder mehrere der folgenden weiteren Schritte oder Aspekte umfassen.

In manchen Beispielen werden alle Elemente des Originalcodes durch entsprechende Ersatzelemente ersetzt. In anderen Beispielen kann nur ein Teil der Elemente des Originalcodes durch entsprechende Ersatzelemente ersetzt werden. Zum Beispiel können nur solche Elemente ersetzt werden, die eine bestimmte Mindestlänge haben (z.B. gemessen in einer Anzahl an Symbolen, bspw. drei Symbole oder mehr). Zusätzlich oder alternativ können nur in bestimmten Teilen des Originalcodes Elemente durch entsprechende Ersatzelemente ersetzt werden. Weiter zusätzlich oder alternativ können nur so lange Elemente durch entsprechende Ersatzelemente ersetzt werden, bis der Originalcode eine gewisse Mindestkürze erreicht hat.

In manchen Beispielen können bestimmte Elemente des Originalcodes nicht ersetzt werden (z.B. Befehle in einer Programmiersprache, in der der Originalcode abgefasst ist).

Zur Veranschaulichung wird in der Folge ein kurzes Beispiel eingeführt. In diesem Beispiel ist der Originalcode in der Programmiersprache C abgefasst. Eine Zeile des Code lautet wie folgt:
rbg_VcuWiperCtrl.rbg_VSSWiperCtrl_stT15Car =
((rbg_VcuWiperCtrl.rbg_VSSWiperCtrl_flgCANTestReq) ?
?rbg_VcuWiperCtrl.rbg_VSSWiperCtrl_stCarT15CarTest_C
:(((Rte_DRead_RP_Com_Car_To_VCU_flgT15On_rba_Nds_Swc_VDP_Car_To _VCU_flgT15On()) ? 1U :0U)));

Wie erkennbar, enthält der Code sehr lange Bezeichner. Nun können diese Elemente durch entsprechende Ersatzelemente ersetzt werden:
b.bt = ((b.ee) ? b.en : (((em()) ? 1 U : 0U)));

Zum Beispiel ist die der Bezeichner für ein Feld einer Variablen "rbg_VcuWiperCtrl.rbg_VSSWiperCtrl_stT15Car" durch den Bezeichner "b.bt" ersetzt worden. Dieser besteht z.B. aus erheblich weniger Buchstaben oder Token.

Das Verfahren umfasst weiterhin Verarbeiten 105 des modifizierten Codes durch ein Maschinenlernmodell. Die Verarbeitung kann jedwede Techniken umfassen, mit denen der (modifizierte) Code verändert, angereichert oder umgestaltet wird. Das Verarbeiten 105 erzeugt einen verarbeiteten modifizierten Code (der verarbeitete modifizierte kann immer noch eine oder mehrere der Ersatzelemente umfassen).

In manchen Beispielen kann das Verarbeiten des modifizierten Codes durch ein Maschinenlernmodell Einbauen zumindest eines Teils des modifizierten Codes in eine Anfrage an das Maschinenlernmodell umfassen. Zum Beispiel kann der modifizierte Code in eine Anfrage (z.B. einen Prompt) eines generativen Sprachmodells eingebaut werden.

In manchen Beispielen umfasst das Verarbeiten Übersetzen des modifizierten Codes von einer ersten Programmiersprache in eine zweite Programmiersprache. In diesen Beispielen kann das Maschinenlernmodell ein auf die Übersetzung von Code von der ersten Programmiersprache in die zweite Programmiersprache trainiertes Maschinenlernmodell sein (z.B. ein generatives Sprachmodell, bspw. ein Large-Language-Modell).

Zusätzlich oder alternativ kann Verarbeiten das Verändern des modifizierten Codes gemäß einem vorbestimmten Zielkriterium umfassen. In diesen Beispielen kann das Maschinenlernmodell ein auf die Verbesserung von Code in Bezug auf das Zielkriterium trainiertes Maschinenlernmodell sein (z.B. ein generatives Sprachmodell, bspw. ein Large-Language-Modell). Das Zielkriterium kann beispielsweise ein Entfernen von Fehlern aus dem modifizierten Code sein. In diesem Fall kann das Verarbeiten entfernen von Fehlern aus dem modifizierten Code umfassen. Zusätzlich oder alternativ kann das Zielkriterium Optimieren des modifizierten Codes umfassen (z.B. Verbessern einer Leistungsfähigkeit des modifizierten Codes in Bezug auf eine Aufgabe, Verringerung eines Ressourcenbedarfs des modifizierten Codes, Anpassen des modifizierten Codes an eine Formatvorgabe und/oder andere Optimierungen). In diesem Fall kann das Verarbeiten optimieren des modifizierten Codes umfassen.

Weiter zusätzlich oder alternativ kann das Verarbeiten des modifizierten Codes Umwandeln des modifizierten Codes umfassen von einer Anpassung auf eine erste Ausführungsumgebung (z.B. eine erste Hardware-Plattform) auf eine Anpassung an eine zweite Ausführungsumgebung (z.B. eine zweite Hardware-Plattform). In diesen Beispielen kann das Maschinenlernmodell ein auf die Umwandlung von Code von einer Anpassung auf eine erste Ausführungsumgebung (z.B. eine erste Hardware-Plattform) auf eine Anpassung an eine zweite Ausführungsumgebung (z.B. eine zweite Hardware-Plattform) trainiertes Maschinenlernmodell sein (z.B. ein generatives Sprachmodell, bspw. ein Large-Language-Modell). Zum Beispiel kann der modifizierte Code an einem ersten Typ von Recheneinheit (z.B. einem Microcontroller, einem Prozessor, einem Backend-System, einem Cloud-System, einem Edge-System) angepasst sein und durch die Verarbeitung für eine Ausführung auf einem zweiten Typ von Recheneinheit, die sich von dem ersten Typ von Recheneinheit unterscheidet (z.B. einem Microcontroller, einem Prozessor, einem Backend-System, einem Cloud-System, einem Edge-System).

Weiter zusätzlich oder alternativ kann das Verarbeiten des modifizierten Codes Kommentieren oder Erklären des modifizierten Codes umfassen. In diesen Beispielen kann das Maschinenlernmodell ein auf das Kommentieren oder Erklären von Code trainiertes Maschinenlernmodell sein (z.B. ein generatives Sprachmodell, bspw. ein Large-Language-Modell).

Das zur Verarbeitung verwendete Maschinenlernmodell kann jedes geeignete Maschinenlernmodell sein (bspw. ein Maschinenlernmodell, dass eine oder mehrere neuronale Netzwerke beinhaltet). In manchen Beispielen ist das Maschinenlernmodell ein generatives Maschinenlernmodell, z.B. ein generatives Foundation-Modell. In manchen Beispielen kann das Maschinenlernmodell ein Sprachmodell bzw. Modell zur Spracherzeugung umfassen. Zum Beispiel kann das Maschinenlernmodell ein Large Language Model umfassen. Das Maschinenlernmodell kann auf einem bestehenden (trainierten) generativen Maschinenlernmodell aufbauen und mit einem oder mehreren der weiter unten beschriebenen Techniken für den Einsatz in den Verfahren der vorliegenden Offenbarung angepasst sein (z.B. durch weiteres Training und/oder Fine-Tuning). Zum Beispiel kann das generative Maschinenlernmodell eines oder mehrere umfassen von CodeLlama, Llama, Mistral, CoPilot und/oder Sprachmodelle aus der GPT-Familie (zum Beispiel ChatGPT). In anderen Beispielen können Multi-modale Modelle wie beispielsweise Gemini, GPT4o eingesetzt werden.

In dem oben eingeführten kleinen Beispiel kann die eingeführte Codezeile von der Programmiersprache C in die Programmiersprache Rust durch ein Maschinenlernmodell übersetzt werden:
b.bt = if b.ee { b.en } else {if em() { 1 } else { 0 } };

In manchen Beispielen umfasst das Verfahren weiter Rückersetzen 107 der Ersatzelemente durch die Elemente des Originalcodes in dem modifizierten Code. In anderen Worten wird eine durch den Schritt des Ersetzens 103 eingeführte Modifikation in dem verarbeiteten modifizierten Code wieder rückgängig gemacht. Dieser Schritt des Rückersetzen 107 kann einen verarbeiteten Code erzeugen (d.h. einen nicht-modifizierten Code oder auch verarbeiteten Originalcode). In dem verarbeiteten Code können wieder die Bezeichner, Symbole oder anderen Elemente des Originalcodes enthalten sein. In anderen Worten kann der verarbeitete Code aussehen, als ob der Originalcode mittels dem Maschinenlernmodell verarbeitet worden wäre, obwohl nicht der Originalcode selbst, sondern der modifizierte Code verarbeitet wurde (und der Originalcode u.U. gar nicht mit dem Maschinenlernmodell verarbeitbar wäre). Damit können die Einsatzmöglichkeiten des Maschinenlernmodells erweitert werden.

In dem bereits erwähnten Beispiel wird der verarbeitete modifizierte Code in der Programmiersprache Rust in einen verarbeiteten Code durch Rückersetzen der Ersatzelemente gewandelt:
rbg_VcuWiperCtrl.rbg_VSSWiperCtrl_stT15Car = if
rbg_VcuWiperCtrl.rbg_VSSWiperCtrl _fIgCANTestReq
{rbg_VcuWiperCtrl.rbg_VSSWiperCtrl_stCarT15CarTest_C } else {if Rte_DRead_RP_Com_Car_To_VCU_flgT15On_rba_Nds_Swc_VDP_Car_To_V CU_flgT15On() { 1 } else { 0 } };

In manchen Beispielen kann das Ersetzen von Elementen des Originalcodes durch Ersatzelemente und/oder Rückersetzen der Ersatzelemente durch die Elemente des Originalcodes Verwendung eines Wörterbuchs umfassen, das festlegt, wie die Ersatzelemente den Elementen des Originalcodes entsprechen. Zum Beispiel kann das Wörterbuch eine eineindeutige Zuordnung einer Mehrzahl von Elementen zu einer Mehrzahl von Ersatzelementen umfassen (in jeder dafür geeigneten Datenstruktur, bspw. einer Datenbank). Das Ersetzen kann dann Auslesen eines Ersatzelements für ein bestimmtes Element in dem Originalcode aus dem Wörterbuch umfassen. Dementsprechend kann das Rückersetzen Auslesen eines Elements für ein bestimmtes Ersatzelement in dem verarbeiteten modifizierten Code aus dem Wörterbuch umfassen.

In anderen Beispielen kann das Ersetzen von Elementen des Originalcodes durch Ersatzelemente und/oder Rückersetzen der Ersatzelemente durch die Elemente des Originalcodes Verwendung eines regelbasierten Algorithmus umfassen. Zum Beispiel kann der Schritt Verwendung einer Ersetzungs- bzw. Rückersetzungsfunktion umfassen. Die Ersetzungs- bzw. Rückersetzungsfunktion kann eine bijektive Funktion sein, die Elemente eineindeutig Ersatzelementen zuordnet (und gleichzeitig eine Verkürzung der Länge der Ersatzelemente verglichen mit den Elementen bewirkt). Die Rückersetzungsfunktion kann eine Umkehrung der Ersetzungsfunktion sein (d.h. eine Anwendung der Ersetzungsfunktion gefolgt von der Anwendung der Rückersetzungsfunktion stellt eine Identitätsoperation dar). Zum Beispiel kann die Ersetzungsfunktion eine verlustfreie Kompression des Elements zur Erzeugung des Ersatzelements umfassen. Zusätzlich oder alternativ kann die Ersetzungsfunktion eine Codierfunktion umfassen (z.B. eine Entropie-Codierung). Die Ersetzungs- bzw. Rückersetzungsfunktion kann in jedem erdenklichen Format vorliegen (z.B. als Computerprogramm oder als Funktion eines Computerprogramms).

In manchen Bespielen umfassen die Verfahren der vorliegenden Offenbarung Erzeugen eines Wörterbuchs (für die beschriebenen Ersetz- oder Rückersetzschritte). Die Erzeugung kann in manchen Beispielen parallel zu dem Schritt des Ersetzens von Elementen erfolgen. In anderen Beispielen kann die Erzeugung des Wörterbuchs vor den Schritten des Ersetzens von Elementen in einem Originalcode durchgeführt werden (d.h., ein Wörterbuch liegt zu Beginn der Schritte des Ersetzens vor und/oder wurde anhand von anderem Originalcode als dem konkret zur Verarbeitung vorliegenden Originalcode erstellt). In wieder anderen Beispielen kann ein bestehendes Wörterbuch während dem Schritt des Ersetzens von Elementen erweitert und/oder ergänzt werden (z.B. durch neue Paare von Elementen und Ersatzelementen).

In anderen Beispielen umfassen die Verfahren der vorliegenden Offenbarung Erzeugen eines regelbasierten Algorithmus (z.B. einer bijektiven Funktion), der ein Element in ein Ersatzelement umwandelt und umgekehrt (für die beschriebenen Ersetz- oder Rückersetzschritte). Zum Beispiel kann die Ersetzungsfunktion eine verlustfreie Kompression des Elements zur Erzeugung des Ersatzelements umfassen. Zusätzlich oder alternativ kann die Ersetzungsfunktion eine Codierfunktion umfassen (z.B. eine Entropie-Codierung).

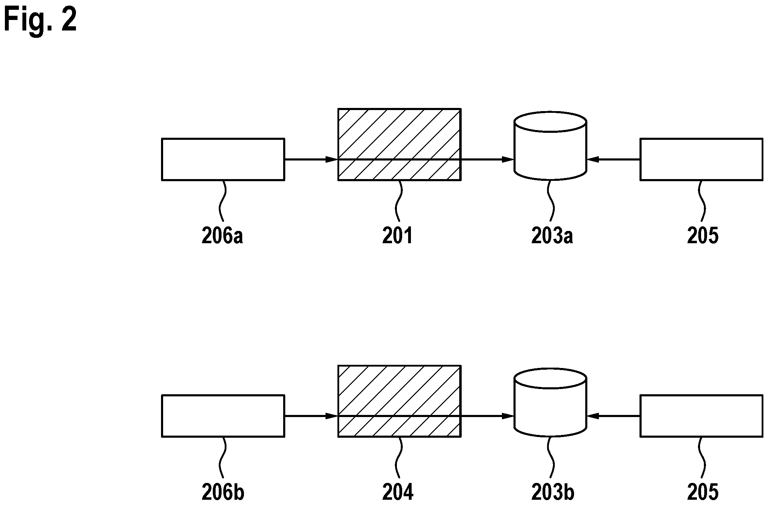

**Fig. 2** zeigt schematisch Verfahren 200 zum Erzeugen eines Wörterbuchs der vorliegenden Offenbarung.

In manchen Beispielen kann das Erzeugen eines Wörterbuchs 203a durch einen regelbasierten Algorithmus 201 erfolgen (z.B. einen der oben beschriebenen regelbasierten Algorithmen aus einem oder mehreren ersten Originalcodes 206a). Zum Beispiel können mittels einer oder mehrerer heuristischer Regeln aus den Elementen (bzw. einer oder mehrerer der oben genannten Symbole, die die Elemente bilden) die entsprechenden Ersatzelemente gebildet werden.

In anderen Beispielen kann das Wörterbuch mittels eines weiteren Maschinenlernmodells 204 zum Erzeugen eines Wörterbuchs 203b durchgeführt werden (aus einem oder mehreren zweiten Originalcodes 206b). Das weitere Maschinenlernmodell 204 kann darauf trainiert sein, für ein Element ein entsprechendes eindeutiges Ersatzelement zu erzeugen. In manchen Beispielen kann das Ersatzelement einen für Menschen verständlichen Bezeichner enthalten (z.B. ein Bezeichner eines Objekts, einer Klasse, einer Variablen, Funktion oder Methode). In diesem Fall kann das weitere Maschinenlernmodell 204 darauf trainiert sein, Ersatzelemente mit oder aus für Menschen verständlichen Bezeichner zu erzeugen. Das weitere Maschinenlernmodell 204 kann dazu den Kontext des jeweiligen Elements analysieren.

In jedem Fall kann das Verfahren des Erzeugens des Wörterbuchs eine Einzigartigkeits-Prüfung 205 umfassen. Diese kann umfassen, alle Einträge in dem Wörterbuch miteinander zu vergleichen, um festzustellen, ob ein Eintrag doppelt vergeben ist. In diesem Fall kann einer der doppelt vergebenen Einträge (oder beide) geändert werden.

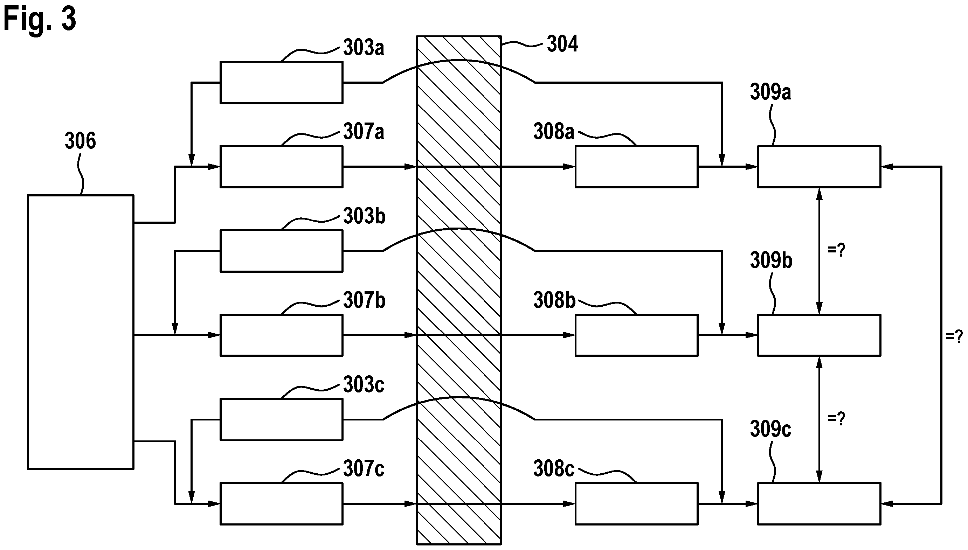

Die vorliegende Offenbarung betrifft auch ein Verfahren zum Trainieren eines Maschinenlernmodells zum Bearbeiten von Programmcode. In der linken Spalte der **Fig. 1** (I) ist ein Flussdiagramm eines Verfahrens zum Trainieren eines Maschinenlernmodells zum Bearbeiten von Programmcode gemäß der vorliegenden Offenbarung gezeigt. **Fig. 3** zeigt schematisch Verfahren zum Trainieren eines Maschinenlernmodells zum Bearbeiten von Programmcode gemäß der vorliegenden Offenbarung.

Das Verfahren zum Trainieren eines Maschinenlernmodells zum Bearbeiten von Programmcode umfasst Zugreifen 115 auf ein Maschinenlernmodell 304. Das Maschinenlernmodell 304 kann für eine der oben beschriebenen Verarbeitungsaufgaben trainiert sein.

Das Verfahren zum Trainieren eines Maschinenlernmodells umfasst Zugreifen 117 auf zwei oder mehr modifizierte Codes 307a, 307b, 307c (z.B. mehr als zwei oder mehr als fünf modifizierte Codes). Jeder modifizierte Code 307a, 307b, 307c ist aus einem Originalcode 306 erzeugt durch Ersetzen von Elementen des Originalcodes 306 durch Ersatzelemente. Die Ersatzelemente sind kürzer als die entsprechenden Elemente des Originalcodes. Die Ersatzelemente für jeden der modifizierten Codes unterscheiden sich zumindest teilweise. In anderen Worten sind die Ersatzelemente für jeden der zwei oder mehr modifizierte Codes unterschiedlich ausgewählt (d.h. derselbe Originalcode 306 wird in zwei oder mehr verschiedenen Weisen modifiziert).

In manchen Beispielen umfasst das Verfahren Ersetzen von Elementen des Originalcodes 306 durch verschiedene Ersatzelemente, um die zwei oder mehr modifizierten Codes 307a, 307b, 307c zu erhalten (bspw. mittels der oben beschriebenen Techniken zum Ersetzen von Elementen). Die zwei oder mehr modifizierten Codes 307a, 307b, 307c können sich in verschieden Weisen unterscheiden, bspw. können verschiedene Wörterbücher 303a, 303b, 303c und/oder verschiedene regelbasierte Algorithmen verwendet werden, um die Ersatzelemente auszuwählen.

Das Verfahren zum Trainieren eines Maschinenlernmodells zum Bearbeiten von Programmcode umfasst weiterhin separates Verarbeiten 119 der zwei oder mehr modifizierten Codes 307a, 307b, 307c durch das Maschinenlernmodell 304. In anderen Worten kann jeder modifizierter Code 307a, 307b, 307c unabhängig von den weiteren modifizierten Codes 307a, 307b, 307c von dem Maschinenlernmodell 304 verarbeitet werden (um zwei oder mehr zugehörige verarbeitete modifizierte Codes 308a, 308b, 308c zu erzeugen).

Das Verfahren zum Trainieren eines Maschinenlernmodells zum Bearbeiten von Programmcode umfasst weiterhin Anpassen 121 des Maschinenlernmodells 304 basierend auf dem einer Analyse eines Ergebnisses des Verarbeitens der zwei oder mehr modifizierten Codes 307a, 307b, 307c. Zum Beispiel kann ein Ziel des Anpassens 121 auf eine Unabhängigkeit von den Ersatzelementen der modifizierten Codes sein. In anderen Worten soll das Maschinenlernmodell 304 dahingehend modifiziert werden, dass ein Verarbeitungsergebnis des Maschinenlernmodells 304 unabhängig von der Art und Weise ist, wie die konkreten Ersatzelemente ausgewählt werden (z.B. das konkrete Wörterbuch und/oder der konkrete regelbasierte Algorithmus). Das Maschinenlernmodell 304 kann danach invariant gegenüber einer Veränderung des Wörterbuchs und/oder des konkreten regelbasierten Algorithmus, das/der für die Schritte des Ersetzens eingesetzt wird, sein.

In manchen Beispielen umfasst die Analyse Vergleichen der Ergebnisse des separaten Verarbeitens der zwei oder mehr modifizierten Codes 307a, 307b, 307c und Anpassen des Maschinenlernmodells 304 basierend auf einem Ergebnis des Vergleichs. Zum Beispiel können in den zwei oder mehr verarbeiteten modifizierten Codes 308a, 308b, 308c jeweils die Ersatzelemente durch die entsprechenden Elemente rückersetzt werden (z.B. mit Hilfe der konkreten Wörterbücher 303a, 303b, 303c und/oder der konkreten regelbasierten Algorithmen). Dadurch können zwei oder mehr verarbeitete Codes 309a, 309b, 309 erzeugt werden. Der Vergleich kann nun beinhalten, zu prüfen, ob die zwei oder mehr verarbeiteten Codes 309a, 309b, 309 gleich oder zumindest ähnlich sind (unter einem vorbestimmten Ähnlichkeitsmaß). Abhängig von einem Ergebnis des Vergleichs kann dann das Anpassen des Maschinenlernmodells 304 (z.B. dessen Parameter) erfolgen, um eine Gleichheit oder Ähnlichkeit der durch dieses erzeugten verarbeiteten Codes herzustellen oder zu erhöhen.

Die Gleichheit oder Ähnlichkeit kann bewertet werden durch eine Prüfung der funktionalen Äquivalenz der verarbeiteten Codes 309a, 309b, 309 (d.h., die verarbeiteten Codes 309a, 309b, 309 zeigen eine gleiche oder ähnliche Funktion). Die funktionale Äquivalenz kann bspw. bewertet werden durch Tests der verarbeiteten Codes 309a, 309b, 309, durch Modell-Prüfungs-Verfahren mit den verarbeiteten Codes 309a, 309b, 309 oder durch Fuzzing der verarbeiteten Codes 309a, 309b, 309.

In manchen Beispielen wird das Anpassen durch ein unüberwachtes Training des Maschinenlernmodells 304 durchgeführt (z.B. basierend auf den oben beschriebenen Vergleichen, anhand derer eine Verlustfunktion für das Training des Maschinenlernmodells 304 erstellt werden kann).

In der rechten Spalte der **Fig. 1** (III) ist ein Flussdiagramm zu Verfahren des Erzeugens und Implementierens von Softwarekomponenten gezeigt, die die mit den Verfahren der vorliegenden Offenbarung verarbeiteten Programmcodes enthalten bzw. auf diesen beruhen.

Die Verfahren der vorliegenden Offenbarung können im Allgemeinen im Rahmen eines Softwareentwicklungsprozesses (z.B. einer Software für ein bestimmtes technisches System, bspw. eine Steuereinheit) durchgeführt werden.

Die vorliegende Offenbarung betrifft auch das Durchführen eines der Verfahren zum Bearbeiten von Programmcode mittels eines Maschinenlernmodells der vorliegenden Offenbarung und Erzeugen einer Softwarekomponente, die den bearbeiteten Programmcode enthält oder auf dem bearbeiteten Programmcode beruht. Das Erzeugen kann einen oder mehrere Schritte umfassen, um den bearbeiteten Programmcode zu einer ausführbaren Softwarekomponente zu machen (z.B. eine Kompilierung). In anderen Fällen kann das Erzeugen eine Softwarekomponente hervorbringen, die noch zu einer ausführbaren Softwarekomponente umgewandelt werden muss.

Das Verfahren kann weiterhin umfassen Implementieren der Softwarekomponente (z.B. einer lauffähigen Softwarekomponente) in einem System. Die Implementierung kann dabei je nach Art des Systems eine Herstellung einer Instanz des Systems, ein Aufspielen der Softwarekomponente, um eine Instanz des Systems zu erzeugen oder ähnliche Implementierungsschritte beinhalten. Zum Beispiel kann eine Softwarekomponente auf eine Recheneinheit aufgespielt werden. Konkrete Softwarekomponenten und Systeme werden weiter unten beschrieben.

Die Vorliegende Offenbarung betrifft auch eine Umgebung, die dazu ausgelegt ist, eines der Verfahren der vorliegenden Offenbarung auszuführen. In manchen Beispielen kann die Umgebung eine Entwicklungsumgebung für Programmcode sein.

Die vorliegende Offenbarung betrifft auch ein Verfahren des Verwendens 113 einer Softwarekomponente oder ein die Softwarekomponente enthaltendes System, die den mit den Techniken der vorliegenden Offenbarung bearbeiteten Programmcode enthält oder auf dem bearbeiteten Programmcode beruht.

In Beispielen kann die Softwarekomponente oder ein die Softwarekomponente enthaltendes System (z.B. ein Steuergerät) zur Regelung und/oder Steuerung und/oder Überwachung eines technischen Systems ausgelegt sein.

In Beispielen kann das Verfahren das Verwenden der Softwarekomponente oder des die Softwarekomponente enthaltenden Systems zur Steuerung, Reglung und/oder Überwachung einer Fahrzeugfunktion, einer Roboterfunktion, einer Gebäudeautomatisierungsfunktion, Elektrowerkzeugautomatisierungsfunktion, und/oder einer Haushaltsgeräteautomatisierungsfunktion umfassen.

In einem Beispiel kann die Softwarekomponente oder ein die Softwarekomponente enthaltendes System zur Anordnung in einem Fahrzeug ausgelegt sein, und/oder zur Steuerung einer Fahrzeugfunktion ausgelegt sein (insbesondere zur Steuerung einer Fahrfunktion). Zum Beispiel kann die Fahrzeugfunktion eine Funktion zum autonomen und/oder assistierten Fahren sein. In manchen Beispielen kann die Softwarekomponente oder ein die Softwarekomponente enthaltendes System zur Ausführung auf einem Computersystem eines Fahrzeugs (bspw. eines autonom, hochautomatisiert oder assistiert fahrenden Fahrzeugs) ausgelegt sein. Zum Beispiel kann das Computersystem lokal in dem Fahrzeug implementiert sein oder (zumindest teilweise) in einem Backend, das mit dem Fahrzeug kommunikativ verbunden ist, implementiert sein. Beispielsweise kann ein die Softwarekomponente enthaltendes System ein Steuergerät umfassen oder sein. In manchen Beispielen kann das Fahrzeug ein Computersystem mit einer Kommunikationsschnittstelle umfassen, die Kommunikation mit einem Backend ermöglicht. Beispielsweise kann in diesem Backend die Softwarekomponente ausgeführt werden. In einem Beispiel kann das bestimmte System ein System zur Querführung und/oder Längsführung des Fahrzeugs sein. In Beispielen kann die Softwarekomponente oder ein die Softwarekomponente enthaltendes System Geschwindigkeitsinformationen oder Distanzinformationen als Eingangsdaten empfangen. Alternativ oder zusätzlich können die Eingangsdaten eine relative Geschwindigkeit und/oder eine Distanz zwischen einem ersten Fahrzeug, einem zweiten Fahrzeug, einem Menschen und/oder einem ortsfesten Objekt umfassen. Alternativ oder zusätzlich können die Eingangsdaten Variablen umfassen, die mindestens auf einem von einem Lenkwinkel, einem Ausrichtungswinkel, einer Gierrate, einem Schlupfwinkel, und/oder einem seitlichen Fehler basieren. Alternativ oder zusätzlich können die Eingangsdaten Informationen aus einem Netzwerk umfassen, wie beispielsweise Bewegungs- und/oder Richtungsinformationen von anderen Fahrzeugen. In Beispielen können diese Informationen mittels Fahrzeug-zu-Fahrzeug-Kommunikation (V2V-Kommunikation) oder mittels eines Backends (V2X-Kommunikation) bereitgestellt werden. Alternativ oder zusätzlich können die Eingangsdaten eine Lenkgeschwindigkeit oder Sollvorgaben für Beschleunigungs- und/oder Bremsvorgänge umfassen.

In Beispielen kann die Softwarekomponente oder ein die Softwarekomponente enthaltendes System zur Anordnung in einer Antriebssteuerung oder eine Antriebseinheit ausgelegt sein und/oder zur Regelung einer motorbezogenen Funktion dienen (insbesondere zur Motorregelung). In Beispielen kann die Softwarekomponente oder ein die Softwarekomponente enthaltendes System zur Anordnung in einer Antriebsregelung einer elektrischen Maschine angeordnet sein. Beispielsweise kann der Zustandsvektor des Zustandsraummodells Variablen enthalten, die mindestens auf einem von einem Steuerungssignal, einem Betriebsmodus oder einer Leistungseinstellung der elektrischen Maschine basieren.

Die vorliegende Offenbarung betrifft auch das Verwenden der Softwarekomponente oder ein die Softwarekomponente enthaltenden Systems zum Steuern und/oder Regeln und/oder Überwachen eines Roboters.

In anderen Beispielen kann die Softwarekomponente oder ein die Softwarekomponente enthaltendes System in einem Roboter angeordnet sein, und/oder zur Steuerung einer Roboterfunktion ausgelegt sein (insbesondere zur Steuerung einer Bewegungsfunktion eines Roboters). Zum Beispiel kann die Softwarekomponente oder ein die Softwarekomponente enthaltendes System ein System zur Querführung und/oder Längsführung des Roboters sein. In manchen Beispielen kann die Softwarekomponente oder ein die Softwarekomponente enthaltendes System auf einem Computersystem eines Roboters ausgeführt werden. Zum Beispiel kann das Computersystem lokal in dem Roboter implementiert sein oder (zumindest teilweise) in einem Backend, das mit dem Roboter kommunikativ verbunden ist, implementiert sein. In manchen Beispielen kann die Softwarekomponente oder ein die Softwarekomponente enthaltendes System in einem Backend ausgeführt werden. In Beispielen kann die Softwarekomponente oder ein die Softwarekomponente enthaltendes System Geschwindigkeitsinformationen oder Distanzinformationen als Eingangsdaten erhalten. Alternativ oder zusätzlich können die Eingangsdaten eine relative Geschwindigkeit und/oder eine Distanz zwischen einem ersten Roboter, einem Menschen, einer weiteren mobilen Vorrichtung und/oder einem ortsfesten Objekt umfassen. Alternativ oder zusätzlich können die Eingangsdaten Variablen umfassen, die mindestens auf einem von einem Lenkwinkel, einem Ausrichtungswinkel, einer Gierrate, einem Schlupfwinkel, und/oder einem seitlichen Fehler basieren. Alternativ oder zusätzlich können die Eingangsdaten Informationen aus einem Netzwerk umfassen, wie beispielsweise Bewegungs- und/oder Richtungsinformationen von anderen Robotern, mobilen Vorrichtung und/oder Menschen. In Beispielen können diese Informationen mittels direkter Kommunikation oder mittels eines Backends bereitgestellt werden. In einem Beispiel kann ein Eingangsvektor eine Lenkgeschwindigkeit oder Sollvorgaben für Beschleunigungs- und/oder Bremsvorgänge umfassen.

Die vorliegende Offenbarung betrifft auch das Verwenden einer Softwarekomponente oder eines die Softwarekomponente enthaltenden Systems zum Steuern und/oder Regeln und/oder Überwachen von Funktionen in der Gebäudeautomatisierung.

In einem Beispiel kann die Softwarekomponente oder ein die Softwarekomponente enthaltenden Systems zur Anordnung in einem Gebäude ausgelegt sein und/oder zur Steuerung und/oder Regelung und/oder Überwachung von Gebäudefunktionen dienen (insbesondere zur Steuerung und/oder Regelung von Gebäudeautomatisierungsfunktionen). Zum Beispiel kann die Gebäudefunktion eine Funktion zum Regeln von Raumtemperatur, Beleuchtung und/oder Sicherheitseinrichtung sein.

Die Techniken der vorliegenden Offenbarung können in manchen Beispielen automatisiert ausgeführt werden.

Offenbart wird weiterhin ein Computer-System, das dafür ausgelegt ist, die Verfahren zum Bearbeiten von Programmcode mittels eines Maschinenlernmodells gemäß der vorliegenden Offenbarung auszuführen. Alternativ oder zusätzlich kann das Computer-System dafür ausgelegt sein, die Verfahren zum Trainieren eines Maschinenlernmodells zum Bearbeiten von Programmcode gemäß der vorliegenden Offenbarung auszuführen. Das Computer-System kann einen Prozessor und/oder einen Arbeitsspeicher umfassen. Das Computer-System kann netzwerkbasiert und/oder verteilt sein. Zum Beispiel können die Schritte des Verarbeitens des modifizierten Codes auf einem entfernten Server (der wiederum ein verteiltes System sein kann), ausgeführt werden.

Offenbart wird weiterhin ein Computer-Programm, das Anweisungen enthält, die, wenn sie von einem Computer-System ausgeführt werden, das Computer-System dazu bringen, die Verfahren zum Bearbeiten von Programmcode mittels eines Maschinenlernmodells gemäß der vorliegenden Offenbarung auszuführen. Alternativ oder zusätzlich kann das ein Computer-Programm Anweisungen enthalten, die, wenn sie von einem Computer-System ausgeführt werden, das Computer-System dazu bringen, die Verfahren zum Trainieren eines Maschinenlernmodells zum Bearbeiten von Programmcode gemäß der vorliegenden Offenbarung auszuführen. Das Computer-Programm kann z.B. in interpretierbarer oder in kompilierter Form vorliegen. Es kann (auch in Teilen) zur Ausführung z.B. als Bit- oder Byte-Folge in den RAM eines Computers geladen werden.

## Patentansprüche

1. Verfahren zum Bearbeiten von Programmcode mittels eines Maschinenlernmodells, das Verfahren umfassend:
Zugreifen (101) auf einen Originalcode (206a; 206b; 306);
Ersetzen (103) von Elementen des Originalcodes (206a; 206b; 306) durch Ersatzelemente, um einen modifizierten Code (307a; 307b; 307c) zu erhalten,
wobei die Ersatzelemente kürzer sind als die entsprechenden Elemente des Originalcodes;
Verarbeiten (105) des modifizierten Codes durch ein Maschinenlernmodell (304).

2. Verfahren gemäß Anspruch 1, weiter umfassend:
Rückersetzen (107) der Ersatzelemente durch die Elemente des Originalcodes (206a; 206b; 306) in dem modifizierten Code (307a; 307b; 307c).

3. Verfahren gemäß Anspruch 1 oder Anspruch 2, wobei das Maschinenlernmodell (304) ein Sprachmodell ist, insbesondere ein Large-Language-Modell.

4. Verfahren gemäß einem der Ansprüche 1 bis 3, wobei die Ersatzelemente weniger Symbole aufweisen als die entsprechenden Elemente des Originalcodes (206a; 206b; 306), insbesondere wobei die Symbole Token des Maschinenlernmodells (304) sind.

5. Verfahren gemäß einem der Ansprüche 1 bis 4, wobei zumindest Teile der Elemente des Originalcodes (206a; 206b; 306) Bezeichner für Komponenten des Originalcodes (206a; 206b; 306) sind, insbesondere Bezeichner von Objekten, Variablen, Funktionen, Methoden und/oder Klassen.

6. Verfahren gemäß einem der Ansprüche 1 bis 5, wobei Verarbeiten des modifizierten Codes (307a; 307b; 307c) eines oder mehrere umfasst von:
Übersetzen des modifizierten Codes (307a; 307b; 307c) von einer ersten Programmiersprache in eine zweite Programmiersprache;
Verändern des modifizierten Codes (307a; 307b; 307c) gemäß einem vorbestimmten Zielkriterium;
Umwandeln des modifizierten Codes (307a; 307b; 307c) von einer Anpassung auf eine erste Ausführungsumgebung auf eine Anpassung an eine zweite Ausführungsumgebung und/oder
Kommentieren oder Erklären des modifizierten Codes (307a; 307b; 307c).

7. Verfahren gemäß einem der Ansprüche 1 bis 6, wobei Verarbeiten des modifizierten Codes (307a; 307b; 307c) durch ein Maschinenlernmodell (304) Einbauen zumindest eines Teils des modifizierten Codes (307a; 307b; 307c) in eine Anfrage an das Maschinenlernmodell (304) umfasst.

8. Verfahren gemäß einer der vorangehenden Ansprüche 1 bis 7, wobei Ersetzen von Elementen des Originalcodes (206a; 206b; 306) durch Ersatzelemente und/oder Rückersetzen der Ersatzelemente durch die Elemente des Originalcodes (206a; 206b; 306) unter Verwendung eines Wörterbuchs (203a, 203b; 303a; 303b; 303c) umfasst, dass festlegt, wie die Ersatzelemente den Elementen des Originalcodes (206a; 206b; 306) entsprechen.

9. Verfahren gemäß Anspruch 8, weiter umfassend Erzeugen des Wörterbuchs (203a, 203b; 303a; 303b; 303c), insbesondere wobei das Wörterbuch mittels eines weiteren Maschinenlernmodells (204) zum Erzeugen eines Wörterbuchs durchgeführt wird.

10. Verfahren zum Trainieren eines Maschinenlernmodells zum Bearbeiten von Programmcode, umfassend:
Zugreifen (115) auf ein Maschinenlernmodell (304);
Zugreifen (117) auf zwei oder mehr modifizierte Codes (307a; 307b; 307c),
wobei jeder modifizierte Code (307a; 307b; 307c) aus demselben Originalcode (306) erzeugt ist durch Ersetzen von Elementen des Originalcodes (306) durch Ersatzelemente,
wobei die Ersatzelemente kürzer sind als die entsprechenden Elemente des Originalcodes (306), und
wobei die Ersatzelemente für jeden der modifizierten Codes (307a; 307b; 307c) sich zumindest teilweise unterscheiden;
Separates Verarbeiten (119) der zwei oder mehr modifizierten Codes (307a; 307b; 307c) durch ein Maschinenlernmodell (304); und
Anpassen (121) des Maschinenlernmodells (304) basierend auf dem einer Analyse eines Ergebnisses des Verarbeitens der zwei oder mehr modifizierten Codes (307a; 307b; 307c) durch das Maschinenlernmodell (304).

11. Verfahren gemäß Anspruch 10, wobei die Analyse umfasst:
Vergleichen der Ergebnisse des separaten Verarbeitens (119) der der zwei oder mehr modifizierten Codes (307a; 307b; 307c); und wobei das Anpassen (121) umfasst:
Anpassen des Maschinenlernmodells (304) basierend auf einem Ergebnis des Vergleichs.

12. Verfahren gemäß Anspruch 11, wobei ein Ziel des Anpassens (121) eine Unabhängigkeit des Verarbeitens von den Ersatzelementen der modifizierten Codes ist.

13. Umgebung, die dazu ausgelegt ist, eines der Verfahren der Ansprüche 1 bis 12 auszuführen, optional wobei die Umgebung eine Entwicklungsumgebung für Programmcode ist.

14. Computer-Programm, das Anweisungen enthält, die, wenn sie von einer Recheneinheit ausgeführt werden, die Recheneinheit dazu bringen, ein Verfahren zum Bearbeiten von Programmcode mittels eines Maschinenlernmodells gemäß eine der Ansprüche 1 bis 10 oder ein Verfahren zum Trainieren eines Maschinenlernmodells zum Bearbeiten von Programmcode gemäß einem der Ansprüche 10 bis 12 auszuführen.
